Europäisches Patentamt

(19) European Patent Office

Office européen des brevets

(11) Numéro de publication: **0 230 800**
**B1**

(12) **FASCICULE DE BREVET EUROPEEN**

(45) Date de publication du fascicule du brevet:
19.07.89

(21) Numéro de dépôt: **86402615.8**

(22) Date de dépôt: **25.11.86**

(51) Int. Cl.⁴: **F16K 11/074**

(54) **Vanne mitigeuse.**

(30) Priorité: **20.12.85 FR 8518909**

(43) Date de publication de la demande:
**05.08.87 Bulletin 87/32**

(45) Mention de la délivrance du brevet:
**19.07.89 Bulletin 89/29**

(84) Etats contractants désignés:
**AT BE CH DE ES GB GR IT LI LU NL SE**

(56) Documents cités:
**DE-B- 1 282 377**
**FR-A- 2 564 933**
**GB-A- 2 123 530**
**US-A- 3 680 592**
**US-A- 4 362 186**

(73) Titulaire: **Compagnie Internationale des Produits
Sanitaires - C.I.P.S., 59, rue Vernouillet,
F-51100 Reims(FR)**

(72) Inventeur: **Limet, Henri, 13, bd Saint-Marceaux,
F-51100 Reims(FR)**
Inventeur: **Jolibois, Michel, 46, rue Newton,
F-51100 Reims(FR)**
Inventeur: **Blavier, Jacques, 27, rue Morvan Lebesque,
F-51370 St Brice Courcelles(FR)**

(74) Mandataire: **Tanguy, Gilbert André, SOCIETE
INTERNATIONALE 19, rue de la Paix, 75002 Paris(FR)**

ACTORUM AG

## Description

L'invention se rapporte à une vanne mitigeuse pour le mélange de deux flux et plus particulièrement destinée au domaine sanitaire, pour le mélange de l'eau chaude et de l'eau froide. L'invention concerne plus particulièrement le domaine des vannes d'un type particulier où les éléments réalisant le mélange sont des plaquettes de céramique comportant des surfaces polies en contact et déplaçables l'une par rapport à l'autre.

Les vannes dites mitigeuses, à plaquettes de céramique (oxyde d'alumine fritté) encore appelées "glaces" en raison de leurs surfaces lisses en contact mutuel, sont de plus en plus appréciées dans le domaine de la robinetterie sanitaire. Les plaquettes de céramique comportent, le plus souvent, des éléments de conduit communiquant d'une plaquette à l'autre, de sorte que la section de passage des deux flux soit rendue ajustable avant leur mélange proprement dit, par le positionnement des deux plaquettes. Les systèmes connus comportent très généralement une plaquette de céramique fixe et une plaquette de céramique mobile, dont on fait varier la position au moyen d'une commande unique en forme de levier, mobile selon deux mouvements correspondant respectivement, pour l'utilisateur, au réglage du débit d'eau mélangée et au réglage du rapport des deux flux dans ledit mélange (p.ex. GB-A 2 123 530).

Jusqu'à présent, les systèmes proposés sont tels que l'arc de réglage du mélange décrit à plein débit d'eau mélangée,est inférieur à celui qui est décrit aux faibles débits. Par conséquent, les efforts de manoeuvre et la sensibilité de réglage ne sont pas constants suivant la position du levier en débit. La modification de l'un des réglages se répercute plus ou moins sur l'autre.

Un premier objet de l'invention est de proposer une vanne à plaquettes polies, actionnée par un levier unique et dont les deux réglages soient réellement indépendants.

Par ailleurs,les dispositifs connus sont pourvus de plaquettes percées de telle façon que,pour la plupart, les deux flux d'eau chaude et froide traversent la plaquette fixe,se mélangent au niveau de la plaquette mobile sans la traverser et que ce mélange soit évacué vers une sortie sensiblement parallèle aux deux entrées, généralement par un orifice supplémentaire de la plaquette fixe. Ce cheminement de l'eau dans la vanne et notamment le changement complet de direction qui s'opère entre les plaquettes fixe et mobile, est très généralement la cause de bruits de fonctionnement relativement gênants, de sorte que de nombreuses vannes de ce genre sont pourvues de tamis anti-bruit, qui présent par ailleurs l'inconvénient majeur de s'obstruer très rapidement. Un autre but de l'invention est de proposer un dispositif présentant un faible niveau de bruit de fonctionnement, sans tamis, notamment en raison du fait que l'eau mélangée peut être évacuée latéralement le long du contour de la plaquette mobile, laquelle ne comporte aucun élément de conduit, les caractéristiques des deux réglages respectivement de débit et de mélange, étant obtenues par la forme même dudit contour.

Dans cet esprit, l'invention concerne essentiellement une vanne mitigeuse pour le mélange de deux flux, comprenant un corps renfermant deux plaquettes comportant chacune une face plane et lisse, ces faces planes étant en contact l'une contre l'autre, l'une des plaquettes étant fixe et comportant deux orifices respectivement en communication avec des conduits d'entrée des deux flux et l'autre plaquette étant mobile et couplée à un levier à rotule, une sortie latérale étant agencée au voisinage de la bordure de la plaquette mobile, caractérisée en ce que ledit levier à rotule est assujetti à se déplacer suivant une direction de pivotement pré-déterminée définie par une rainure de guidage fixe par rapport audit corps, avec possibilité de rotation sur son axe, d'une amplitude prédéterminée pour toute position le long de ladite direction de pivotement, les deux positions extrêmes de rotation étant déterminées par au moins une butée dudit levier coopérant avec les bords de ladite rainure et en ce que ladite plaquette mobile, couplée audit levier à rotule par une projection désaxée de celui-ci, a la forme approximative d'un trapéze aux extrémités arrondies.

Bien entendu, dans l'état actuel de la technique, les plaquettes définies ci-dessus sont de préférence des plaquettes en céramique ou "glaces" comportant respectivement des surfaces lisses en contact pour assurer la distribution et le mélange des deux flux précités. Il est bien évident, cependant, que l'invention couvre en fait tout dispositif à plaquette dont les formes et le montage correspondent à la définition qui précède, même si ces plaquettes ne sont pas en céramique, mais dans un matériau dont l'état de surface et les caractéristiques mécaniques permettent d'obtenir des résultats sensiblement équivalents, voire moins bons, sur le plan de l'étanchéité à la fermeture, notamment.

Selon une autre caractéristique notable de l'invention, lesdites extrémités arrondies sont des portions de cercles, les rayons et les positions de ces cercles étant déduits de la "cinématique" imposée à la plaquette mobile par le levier à rotule précité, comme cela apparaîtra clairement plus loin.

L'invention sera mieux comprise et d'autres avantages de celle-ci apparaîtront plus clairement à la lumière de la description qui va suivre d'un mode de réalisation actuellement préféré d'une vanne mitigeuse conforme à son principe, donnée uniquement à titre d'exemple et faite en référence aux dessins annexés, dans lesquels :

- la figure 1 est une vue en perspective éclatée des éléments constitutifs de la vanne;
- la figure 2 est une vue en coupe et avec arrachement partiel de la vanne, montée;
- la figure 3 représente la plaquette fixe et plus particulièrement sa face en contact avec ladite plaquette mobile;
- la figure 4 représente la plaquette mobile et plus particulièrement sa face en contact avec ladite plaquette fixe;
- la figure 5 représente la plaquette mobile et plus particulièrement l'autre face de celle-ci;
- la figure 6 représente une plaquette de manoeuvre de la plaquette mobile et plus particulièrement la face de celle-ci qui s'emboîte dans ladite plaquette mobile, une pièce de couplage auto-lubrifiante étant également représentée en place de l'autre côté de ladite plaquette de manoeuvre;

- la figure 7 représente la même plaquette de manoeuvre vue du côté opposé à celui de la figure 6;

- la figure 8 représente la pièce de couplage de la figure 6, vue du côté qui s'emboîte dans ladite plaquette de manoeuvre; et

- les figures 9a à 9c illustrent schématiquement, par leurs contours les plaquettes fixe et mobile dans les positions relatives qu'elles occupent pour quatre positions remarquables du levier à rotule qui commande la plaquette mobile.

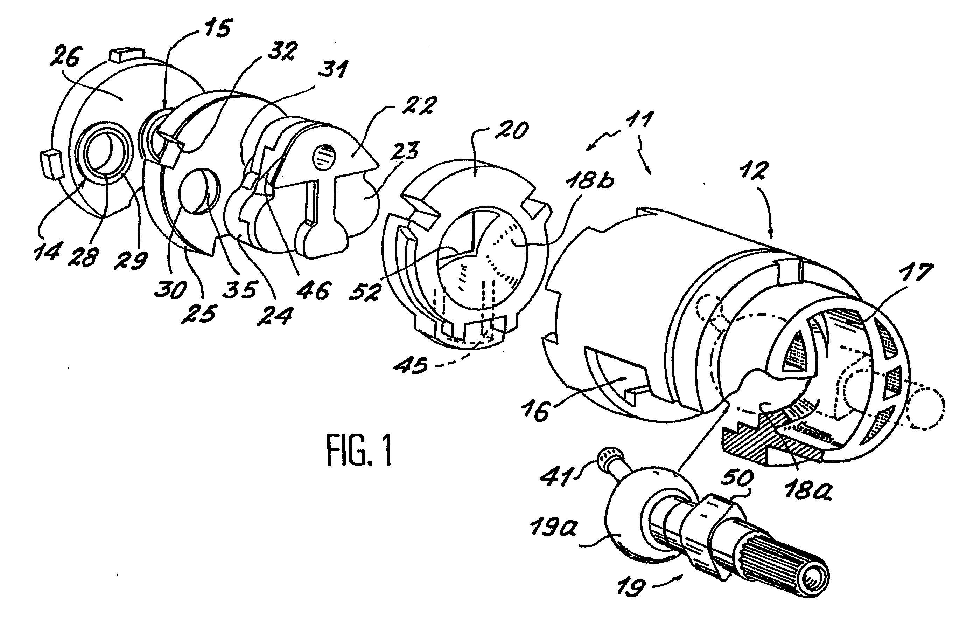

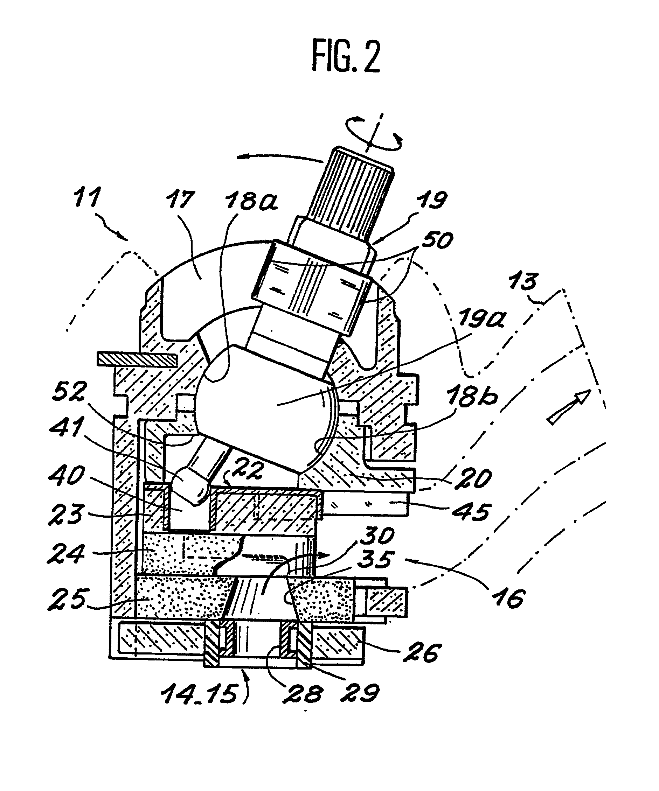

En se reportant aux dessins, on a représenté une vanne mitigeuse 11, comportant un corps 12, par exemple en matière plastique moulée, destiné à être inséré dans une cavité adaptée d'un robinet 13 esquissé en traits mixtes sur la figure 2. Les deux flux d'eau chaude et d'eau froide sont respectivement introduits dans le corps par deux entrées 14 et 15 situées à la partie inférieure du corps (en considérant la figure 2), tandis qu'une large sortie latérale 16 d'eau mélangée s'ouvre en regard du conduit de sortie du robinet 13. Comme le montrent les fig. 1 et 2, le corps de vanne 12 est conformé pour présenter, à sa partie supérieure, une rainure de guidage courbe 17 débouchant dans une portion de cavité 18a à surface sphérique, prévue pour l'articulation d'un levier à rotule 19. Le corps 12 abrite en outre et dans l'ordre, ledit levier à rotule 19, engagé dans la rainure 17, un socle interne 20, fixe à l'intérieur dudit corps et conformé notamment pour définir l'autre portion de cavité 18b à surface sphérique dans laquelle s'articule la rotule 19a du levier 19, une pièce de couplage 22 à paroi mince, en matériau auto-lubrifiant, une plaquette de manoeuvre 23, une plaquette mobile 24 en céramique, une plaquette fixe 25 en céramique, et une paroi de fond 26 fixée audit corps et comportant dans son épaisseur deux perçages pour les arrivées d'eau froide et d'eau chaude. Chaque perçage abrite une bague de raccordement 28 métallique, entourée d'un joint d'étanchéité tubulaire 29 en caoutchouc ou matériau élastomère équivalent. Cet agencement définit ainsi l'entrée d'eau chaude 14 et l'entrée d'eau froide 15, à l'extrémité inférieure du corps de vanne formée par la paroi de fond 26. La "céramique" des plaquettes 24 et 25 est, de préférence, de l'oxyde d'alumine; la forme des plaquettes est obtenue par frittage. La plaquette fixe 25 a approximativement la forme d'un disque comportant, le long de son bord circulaire, des entailles 32 coopérant avec des saillies latérales internes dudit corps 12, pour l'immobilisation de ladite plaquette fixe dans ledit corps. Les joints 29 s'appliquent de façon étanche autour des orifices inférieurs de deux perçages coniques inclinés 35 s'étendant dans l'épaisseur de la plaquette fixe 25 et dont les orifices circulaires supérieurs 30 et 31 (respectivement pour l'eau chaude et l'eau froide) débouchent sur la face lisse de la plaquette mobile 24. Les deux orifices 30 et 31 sont écartés d'une distance choisie et ont un diamètre prédéterminé.

Comme on le verra plus loin, cette distance d'écartement et ce diamètre sont des paramètres importants dans la détermination de la forme et des dimensions de la plaquette mobile.

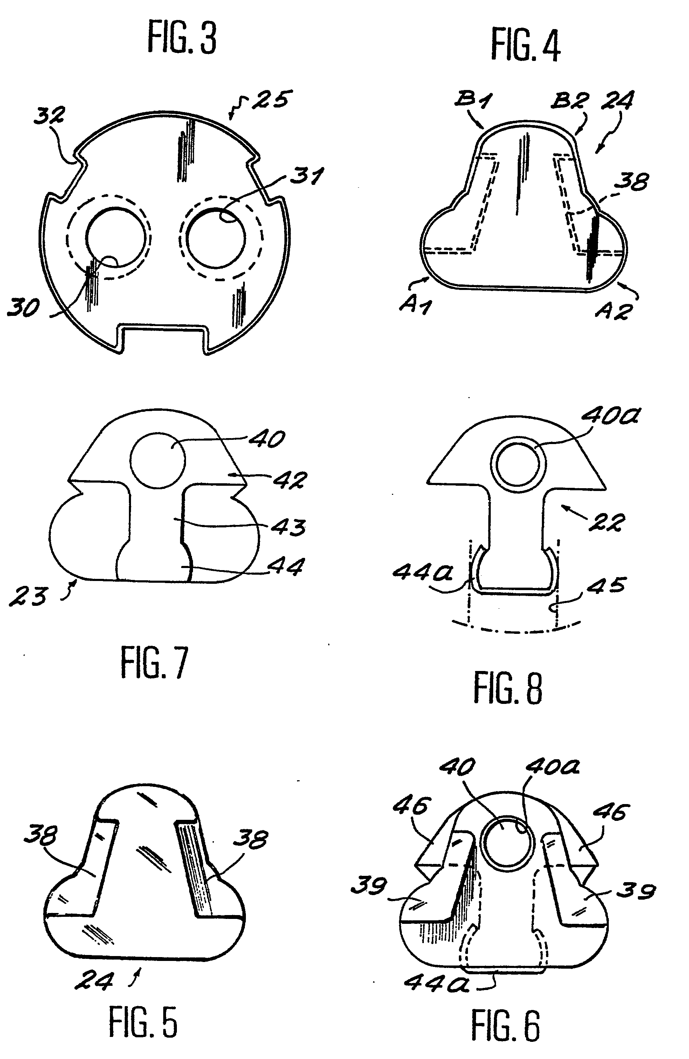

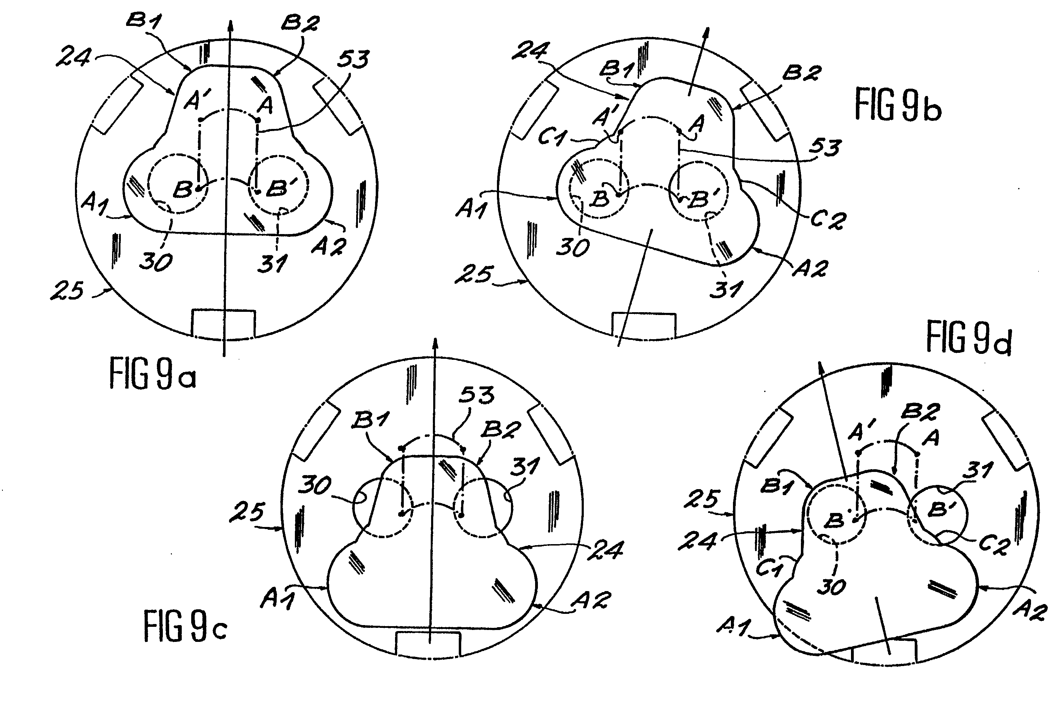

La plaquette mobile 24 est en contact par sa face lisse représentée à la figure 4 avec la plaquette fixe 25 représentée à la figure 3. Elle ne comporte aucun perçage. L'obturation variable des orifices 30 et 31 est déterminée par le contour spécial de la plaquette 24. La face opposée de cette dernière (figure 5) comporte un relief défini par deux dégagements latéraux 38. Un relief complémentaire matérialisé par deux joues d'encastrement 39 est formé sur la plaquette de manoeuvre 23. Cette dernière, en matière plastique moulée, s'emboîte ainsi naturellement sur la plaquette mobile 24. La plaquette de manoeuvre comporte une cavité 40 dans laquelle est engagée une projection 42 faisant saillie à la partie inférieure de la rotule 19a. La projection 41 est désaxée par rapport au levier 19. La face 42 de la plaquette de manoeuvre 23 opposée à la plaquette mobile comporte une nervure de guidage 43 munie d'un élargissement arrondi 44 engagé dans une gorge fixe 45 définie à la face inférieure (toujours en considérant la figure 2) du socle interne 20. La pièce de couplage 22 (en matière plastique chargée de bisulfite de molybdène) est conformée pour recouvrir les bords et la paroi interne de la cavité 40, ainsi que la nervure 43 et son élargissement arrondi 44, notamment les flancs de celui-ci. Elle comporte à cet effet une portion tubulaire 40a et une jupe 44a à profil bombé. De plus, les flancs de la plaquette de manoeuvre 23 comportent des surfaces en encorbellement 46, prolongeant les joues d'encastrement 39. Cette particularité de structure constitue un déflecteur pour l'eau sortant des orifices 30 et 31, ce qui facilite l'écoulement silencieux de l'eau vers la sortie latérale 16, tout en évitant les phénomènes de cavitation. Selon une particularité importante de l'invention, le levier à rotule 19 est assujetti à se déplacer suivant une direction de pivotement prédéterminée définie par la rainure 17, le centre de pivotement étant celui de la rotule 19a. Le levier est en outre monté avec possibilité de rotation sur son axe, d'une amplitude prédéterminée, pour chacune de ses positions le long de ladite rainure. Pour ce faire, le levier 19 comporte une double butée 50, en forme de came, engagée dans l'épaisseur de la rainure 17 et susceptible d'entrer en contact avec les flancs de celle-ci. Les deux positions extrêmes de rotation du levier sur lui-même sont ainsi déterminées lorsque ladite double butée 50 entre en contact avec les flancs de la rainure 17. La projection excentrée 41 se situe sensiblement dans un plan de symétrie de la butée 50. Elle traverse une fenêtre inférieure 52 du socle interne 20 pour transmettre son mouvement à la plaquette mobile 24 via la plaquette de manoeuvre 23. Dans ces conditions, l'extrémité de la projection 41 peut occuper n'importe quelle position dans une surface délimitée par un contour 53 représenté en traits mixtes sur les figures 9a à 9c, le contour 53 lui-même correspondant à au moins une position extrême (en rotation ou en pivotement suivant les définitions qui précèdent) du levier à rotule 19.

Bien entendu, le mouvement de pivotement (le long de la rainure 17) commande le débit d'eau à la sortie 16, tandis que le mouvement de rotation du levier sur son axe commande le mélange de l'eau chaude et de l'eau froide.

On conçoit que, grâce à la conception et au montage du levier à rotule, conformément à la description qui précède, les deux mouvements de réglage soient totalement indépendants, puisque, pour toute position de pivotement du levier, l'amplitude de rotation de ce même levier est constante et déterminée par la butée 50 et la rainure 17.

Selon une caractéristique importante de l'invention, la face de la plaquette mobile 24 en contact avec la plaquette fixe 25 a la forme approximative d'un "trapèze" aux extrémités arrondies (voir figure 4). Lesdites extrémités arrondies sont plus particulièrement des portions de cercles, puisque les orifices 30 et 31 qu'elles doivent recouvrir dans certaines positions sont aussi circulaires. Bien entendu, si les orifices 30 et 31 devaient avoir une forme différente, par exemple ovalisée, les extrémités arrondies dudit trapèze ne seraient pas obligatoirement des cercles, et l'invention couvre toutes ces variantes d'exécution possibles.

Considérant plus particulièrement les figures 9a à 9d, il apparaît que le contour de toute la partie inférieure du "trapèze" est liée à l'écartement et au diamètre des orifices 30 et 31. Plus précisément, le centre de la portion de cercle définissant chaque extrémité $A_1$ ou $A_2$ de la base la plus large du "trapèze" est placé pour être sensiblement superposé au centre de l'un (30, figure 9b) des deux orifices de la plaquette fixe lorsque le levier à rotule est placé à l'extrémité de la rainure 17 qui correspond à la fermeture de la vanne et dans une position extrême de rotation sur lui-même, respectivement. Sur la figure 9b, cette position particulière du levier à rotule est telle que la projection excentrée 41 se trouve en A sur le contour 53. On voit que dans ces conditions et en considérant la figure 9b, l'extrémité arrondie $A_1$ de la grande base du trapèze recouvre plus particulièrement l'orifice 30. Lorsque le levier à rotule est dans l'autre position possible définie ci-dessus, l'autre extrémité arrondie $A_2$ de la grande base du trapèze recouvre plus particulièrement l'orifice 31 et la projection désaxée 41 se trouve alors en A' sur le contour 53. Les figures 9a et 9b illustrent deux configurations de fermeture de la vanne. Sur la figure 9a, la vanne est fermée en position de mélange égal des deux flux, alors que sur la figure 9d la vanne est fermée en position de sélection maximum de l'un des deux flux (ici l'eau chaude).

En outre, chaque bord de ladite plaquette mobile 24 comprise entre les deux bases dudit "trapèze" comporte une portion de cercle $C_1$ ou $C_2$ disposée pour que, pour chacune des deux positions extrêmes de pivotement dudit levier à rotule placé à l'extrémité de ladite rainure de guidage qui correspond à la fermeture de la vanne (figure 9b), le centre de l'autre (31) des deux orifices soit sensiblement confondu avec le centre de l'une de ces portions de cercle (C), respectivement. On voit que dans cette position de fermeture de la vanne pour laquelle la projection désaxée est en A, la portion de cercle $C_2$ améliore l'étanchéité de fermeture de l'orifice 31. Dans l'autre position de fermeture symétrique pour laquelle la projection désaxée se trouve en A', la portion de cercle $C_1$ améliore l'étanchéité de l'obturation de l'orifice 30.

De façon analogue à ce qui a été décrit plus haut, le centre de la portion de cercle définissant chaque extrémité $B_1$ ou $B_2$ de la base la plus courte dudit trapèze est placée pour être sensiblement superposée au centre de l'un (30, figure 9d) des deux orifices de la plaquette fixe lorsque ledit levier à rotule est placé à l'extrémité de la rainure de guidage 17 qui correspond à l'ouverture maximum de la vanne et dans une position extrême de rotation suir lui-même, respectivement. Sur la figure 9d, cette position particulière du levier à rotule est telle que la projection 41 se trouve en B sur le contour 53. On voit que dans ces conditions, l'extrémité arrondie $B_1$ de la petite base du trapèze recouvre plus particulièrement l'orifice 30. Lorsque le levier à rotule est dans l'autre position possible de mélange pour l'ouverture maximum, l'autre extrémité arrondie $B^2$ de la petite base du trapèze recouvre plus particulièrement l'orifice 31 et la projection désaxée se trouve en B' sur le contour 53. Les figures 9c et 9d illustrent deux configurations d'ouverture maximum de la vanne. Sur la figure 9c, la vanne est ouverte au maximum en position de mélange égal des deux flux, alors que sur la figure 9d, la vanne est totalement ouverte en position de sélection maximum de l'un des deux flux, (ici l'eau froide).

Il apparaît clairement que la description qui précède du contour de la plaquette mobile constitue en fait une veritable méthodologie de détermination dudit contour en fonction du mouvement imparti par le levier à rotule d'une part et des perçages pratiqués dans la plaquette fixe d'autre part.

## Revendications

1. Vanne mitigeuse pour le mélange de deux flux, comprenant un corps (12) renfermant deux plaquettes (24, 25) comportant chacune une face plane et lisse, ces faces planes étant en contact l'une contre l'autre, l'une des plaquettes (25) étant fixe et comportant deux orifices (30, 31) respectivement en communication avec des conduits d'entrée des deux flux et l'autre plaquette (24) étant mobile et couplée à un levier à rotule (19), une sortie latérale (16) étant agencée au voisinage de la bordure de la plaquette mobile, caractérisée en ce que ledit levier à rotule est assujetti à se déplacer suivant une direction de pivotement pré-déterminée définie par une rainure de guidage (17) fixe par rapport audit corps, avec possibilité de rotation sur son axe d'une amplitude prédéterminée, pour toute position le long de ladite direction de pivotement, les deux positions extrêmes de rotation étant déterminées par au moins une butée (50) dudit levier coopérant avec les bords de ladite rainure et en ce que ladite plaquette mobile (24), couplée audit levier à rotule par une projection désaxée (41) de celui-ci, a la forme approximative d'un trapèze aux extrémités arrondies.

2. Vanne mitigeuse selon la revendication 1, caractérisée en ce que lesdites extrémités arrondies

(A₁, A₂, B₁, B₂) sont des portions de cercles.

3. Vanne mitigeuse selon la revendication 2, caractérisée en ce que le centre de la portion de cercle définissant chaque extrémité (A₁, A₂) de la base la plus large dudit trapèze est placé pour être sensiblement superposé avec le centre de l'un des deux orifices (30) de ladite plaquette fixe lorsque ledit levier à rotule est placé à l'extrémité de ladite rainure de guidage (17) qui correspond à la fermeture de la vanne et dans une position extrême de rotation sur lui-même, respectivement.

4. Vanne selon la revendication 3, caractérisée en ce que chaque bord de ladite plaquette mobile (24) compris entre les deux bases dudit trapèze comporte une portion de cercle (C₁, C₂) disposée pour que, pour chacune des deux positions extrêmes de pivotement dudit levier à rotule à l'extrémité de ladite rainure de guidage qui correspond à la fermeture de la vanne (figure 9b), le centre de l'autre des deux orifices (31) soit sensiblement confondu avec le centre de l'une (C₂) de ces portions de cercle respectivement.

5. Vanne selon la revendication 2 ou 3, caractérisée en ce que le centre de la portion de cercle définissant chaque extrémité (B₁, B₂) de la base la plus courte dudit trapèze est placé pour être sensiblement superposé au centre de l'un des deux orifices (30, figure 9d) de ladite plaquette fixe, lorsque ledit levier à rotule est placé à l'extrémité de ladite rainure de guidage qui correspond à l'ouverture maximum de la vanne et dans une position extrême de rotation, respectivement.

6. Vanne selon l'une des revendications précédentes, caractérisée en ce que la face de ladite plaquette mobile opposée à celle qui est en contact avec ladite plaquette fixe présente un relief (38) emboîté dans un relief complémentaire d'une plaquette de manoeuvre (23) comportant une cavité (40) dans laquelle est engagée ladite projection désaxée (41).

7. Vanne selon la revendication 6, caractérisée en ce que ladite plaquette de manoeuvre (24) comporte une nervure de guidage (43) comprenant un élargissement arrondi (44) engagé dans une gorge fixe (45).

8. Vanne selon l'une des revendications précédentes, caractérisée en ce que les plaquettes fixes et mobiles précitées sont, de façon connue en soi, en une céramique choisie, par exemple, en oxyde d'alumine.

9. Vanne selon la revendication 8, caractérisée en ce que la forme de chaque plaquette est obtenue par frittage.

**Patentansprüche**

1. Mischventil zum Mischen zweier Fluidströme, mit einem Gehäuse (12), das zwei Scheiben (24, 25) umschließt, von denen jede eine ebene und glatte Seite umfaßt, wobei diese ebenen Seiten miteinander in Kontakt stehen, wobei eine der Scheiben (25) unbeweglich ist und zwei Öffnungen (30, 31) umfaßt, die jeweils mit Einlaßleitungen der beiden Fluidströme in Verbindung stehen, wobei die andere Scheibe (24) beweglich und an einen Kugelgelenkhebel (19) angeschlossen ist, und wobei ein Seitenausgang (16) benachbart zum Rand der beweglichen Scheibe angeordnet ist, dadurch gekennzeichnet, daß der Kugelgelenkhebel zu einer Verstellung entlang einer Schwenkrichtung ausgelegt ist, die durch eine mit Bezug auf das Gehäuse feststehende Führungsnut (17) mit der Option der Drehbarkeit um seine Achse mit einer vorbestimmten Amplitude bestimmt ist, und zwar für jede Stellung entlang der Schwenkrichtung, wobei die beiden Drehextremstellungen durch wenigstens einen Anschlag (50) des Hebels bestimmt sind, der mit den Rändern der Nut zusammenwirkt, und daß die bewegliche Scheibe (24), die an den Kugelgelenkhebel über einen an diesem seitlich versetzten Vorsprung (41) angeschlossen ist, in etwa die Gestalt eines Trapezes mit abgerundeten Enden besitzt.

2. Mischventil nach Anspruch 1, dadurch gekennzeichnet, daß die abgerundeten Enden (A₁, A₂, B₁, B₂) Kreisabschnitte sind.

3. Mischventil nach Anspruch 2, dadurch gekennzeichnet, daß das Zentrum des Kreisabschnitts, das jedes der Enden (A₁, A₂) der größten Basis des Trapezes bestimmt, so angeordnet ist, daß es in etwa über dem Zentrum eines der beiden Öffnungen (30) der unbeweglichen Scheibe zu liegen kommt, wenn der Kugelgelenkhebel an dem Ende der Führungsnut (17) angeordnet ist, das der Ventilschließstellung entspricht, sowie in jeweils einer Drehextremstellung mit Bezug auf sich selbst.

4. Mischventil nach Anspruch 3, dadurch gekennzeichnet, daß jeder Rand der zwischen den beiden Basen des Trapezes liegenden beweglichen Scheibe (24) einen Kreisabschnitt (C₁, C₂) umfaßt, der so angeordnet ist, daß das Zentrum der anderen der beiden Öffnungen (31) jeweils in etwa mit dem Zentrum des einen (C₂) dieser Kreisabschnitte für jede der beiden Schwenkextremstellungen des Kugelgelenkhebels an dem Ende der Führungsnut, die der Ventilschließstellung entspricht (Fig. 9b), zusammenfällt.

5. Mischventil nach Anspruch 2 oder 3, dadurch gekennzeichnet, daß das Zentrum des Kreisabschnitts, das jedes der Enden (B₁, B₂) der kürzesten Basis des Trapezes bestimmt, so angeordnet ist, daß es in etwa über dem Zentrum der beiden Öffnungen (30, Fig. 9d) der unbeweglichen Scheibe zu liegen kommt, wenn der Kugelgelenkhebel an dem Ende der Führungsnut angeordnet ist, das der maximalen Ventilöffnungsstellung entspricht, sowie in jeweils einer Drehextremstellung.

6. Mischventil nach einem der vorangehenden Ansprüche, dadurch gekennzeichnet, daß diejenige Seite der beweglichen Scheibe, die derjenigen gegenüberliegt, die in Kontakt mit der unbeweglichen Scheibe steht, ein Relief (38) aufweist, das in ein komplementäres Relief einer Betätigungsscheibe (23) eingepaßt ist, die eine Ausnehmung (40) umfaßt, in welche der seitlich versetzte Vorsprung (41) eingreift.

7. Mischventil nach Anspruch 6, dadurch gekennzeichnet, daß die Betätigungsscheibe (24) eine Führungsrippe (43) mit einer verrundeten Erweiterung (44) umfaßt, die in eine unbewegliche Nut (45) eingesetzt ist.

8. Mischventil nach einem der vorangehenden Ansprüche, dadurch gekennzeichnet, daß die beweglichen und unbeweglichen Scheiben in an sich bekannter Weise aus einer Keramik, beispielsweise einem Aluminiumoxid bestehen.

9. Mischventil nach Anspruch 8, dadurch gekennzeichnet, daß die Gestalt jeder Scheibe durch Sintern erzeugt ist.

## Claims

1. Mixer valve for mixing two flows, comprising a body (12) containing two plates (24, 25) each having a flat and smooth face, these flat faces being in contact against each other, one of the plates (25) being fixed and having two orifices (30, 31) respectively in communication with inlet ducts for the two flows and the other plate (24) being movable and coupled to a ball and socket lever (19), a lateral outlet (16) being provided in the vicinity of the edge of the movable plate, characterized in that said ball and socket lever is forced to move in a predetermined pivoting direction defined by a guide groove (17) fixed with respect to said body, with the possibility of rotation about its axis through a predetermined amplitude, for any position along said pivoting direction, the two endmost positions of rotation being defined by a least one stop (50) of said lever cooperating with the edges of said groove and in that said movable plate (24), coupled to said ball and socket lever by an offcentred projection (41) thereof, has the approximate shape of a trapezium with rounded ends.

2. Mixer valve according to claim 1, characterized in that said rounded ends ($A_1$, $A_2$, $B_1$, $B_2$) are portions of circles.

3. Mixer valve according to claim 2, characterized in that the centre of the circle portion defining each end ($A_1$, $A_2$) of the widest base of said trapezium is positioned so as to be substantially superimposed with the centre of one of the two orifices (30) of said fixed plate when said ball and socket lever is placed at the end of said guide groove (17), which corresponds to closure of the valve and in an endmost position of rotation on itself respectively.

4. Valve according to claim 3, characterized in that each edge of said movable plate (24) situated between the two bases of said trapezium comprises a circle portion ($C_1$, $C_2$) disposed so that, for each of the two endmost pivoting positions of said ball and socket lever at the end of said guide groove which corresponds to closure of the valve (figure 9b), the centre of the other two orifices (31) merges substantially with the centre of one ($C_2$) of these circle portions respectively.

5. Valve according to claim 2 or 3, characterized in that the centre of the circle portion defining each end ($B_1$, $B_2$) of the shortest base of said trapezium is placed so as to be substantially superimposed on the centre of one of the two orifices (13, figure 9d) of said fixed plate, when said ball and socket lever is placed at the end of said guide groove which corresponds to maximum opening of the valve and in an endmost position of rotation, respectively.

6. Valve according to one of the preceding claims, characterized in that the face of said movable plate opposite that which is in contact with said fixed plate has a relief (38) fitting into a complementary relief of an operating plate (23) comprising a cavity (40) in which said offcentred projection (41) is engaged.

7. Valve according to claim 6, characterized in that said operating plate (24) comprises a guide groove (43) with a rounded widened portion (40) engaged in a fixed groove (45).

8. Valve according to one of the preceding claims, characterized in that the above fixed and movable plates, in a way known per se, are made from a ceramic, for example alumina oxide.

9. Valve according to claim 8, characterized in that the shape of each plate is obtained by sintering.

FIG. 1

## FIG. 2

# FIG. 3

# FIG. 4

# FIG. 7

# FIG. 8

# FIG. 5

# FIG. 6

FIG 9a

FIG 9b

FIG 9c

FIG 9d